# EUROPEAN PATENT APPLICATION

(11) **EP 3 139 243 A1**
(43) Date of publication of application: **08.03.2017**
(21) Application number: 16187234.6
(22) Date of filing: 05.09.2016
(51) Int. Cl.: G06F 1/16

(54) **WEARABLE TECHNOLOGY FINEWEAR**

(30) Priority: 03.09.2015 US 201562213923 P
(71) Applicant: Flextronics AP, LLC, San Jose, CA 95002 (US)
(72) Inventor: Monteith, David R., San Fransisco, CA California 94114 (US); Takeuchi, Kenji, Atlanta, GA Georgia 30345 (US); Stanford, Robert N., Flowery Branch, GA Georgia 30542 (US)
(74) Representative: Witte, Weller & Partner Patentanwälte mbB

(57) **Abstract**

Embodiments of the disclosure provide an interchangeable wearable technology module and associated jewelry or other finewear, clothing, accessories, or other wearables. This interchangeable "smart" module can be integrated into multiple styles and pieces of jewelry across an entire product line. The module can be inserted into pendants, bracelets and rings and be interchanged between them by the consumer. The consumer may purchase an interchangeable module together with a particular piece of jewelry or other wearable article. Additionally or alternatively, the consumer may purchase one or more modules and one or more wearable articles separately and then interchange the modules between the articles as needed or as desired.

## Description

### CROSS REFERENCE TO RELATED APPLICATION

The present application claims the benefits of and priority, under 35 U.S.C. § 119(e), to U.S. Provisional Application Number 62/213,923 filed September 3, 2015 and entitled "Wearable Technology Fineware" of which the entire disclosure is incorporated herein by reference for all purposes.

### FIELD OF THE DISCLOSURE

Embodiments of the present disclosure relate generally to wearable technology devices and more particularly to an interchangeable wearable technology module and associated jewelry or other finewear, clothing, accessories, or other wearables.

### BACKGROUND

The use of wearable devices of different types has grown and continues to grow. For example, various fitness trackers, smart watches, and similar devices are increasingly common and becoming more popular. It is estimated that 60 million such devices are sold annually with an estimated compound annual growth rate of 35% projected through 2018. However, one of the biggest barriers to further adoption of wearable devices is the appearance of the device itself. That is, the external styling of the device itself does not appeal to everyone.

Jewelry makers want to enter the wearable device market and are well-suited for providing a variety of styles that appeal to a wide range of people. However, incorporating wearable device technology into a piece of jewelry can be a significant challenge. For example, jewelry is typically designed, produced, and marketed in a very short time period making the inclusion of wearable technology in this time period extremely difficult. Furthermore, jewelry style can change frequently and so a static design of a wearable device incorporated in a piece of jewelry can become outdated rapidly. Further still, consumers want to have a variety of different types and styles for different types of dress, occasions, etc. Purchasing a number of different devices of different types or styles can costly, inconvenient, and undesirable for the consumer. Hence, there is a need for improved ways to incorporate wearable device technology into associated jewelry or other finewear, clothing, accessories, or other wearables.

### BRIEF SUMMARY

Embodiments of the disclosure provide an interchangeable wearable technology module and associated jewelry or other finewear, clothing, accessories, or other wearables. This interchangeable "smart" module can be integrated into multiple styles and pieces of jewelry across an entire product line. The module can be inserted into pendants, bracelets and rings and be interchanged between them by the consumer. The consumer may purchase an interchangeable module together with a particular piece of jewelry or other wearable article. Additionally or alternatively, the consumer may purchase one or more modules and one or more wearable articles separately and then interchange the modules between the articles as needed or as desired.

According to one embodiment, a wearable device can comprise a processor and a memory communicatively coupled with the processor and storing instructions which, when executed by the processor, cause the processor to detect conditions or events and provide one or more notifications based on the detected conditions or events. The device can further comprise a case enclosing the processor and the memory. The case can be configured to be mountable in and interchangeable between different wearable objects or articles by a user of the device. For example, the different wearable objects or articles can comprise one or more of a ring, a bracelet, or a pendant.

According to one embodiment, the device can further comprise a communications module within the case of the device. In such an embodiment, the instructions can further cause the processor to communicate with a computing device via the communications module. The device can further comprise a reset button within the case of the device and the instructions can further cause the processor to perform a pairing with the computing device in response to actuation of the reset button.

Additionally or alternatively, the device can comprise a haptic output device within the case of the device. In such an embodiment, the instructions can further cause the processor to provide the one or more notifications through the haptic output device.

Additionally or alternatively, the device can comprise an accelerometer within the case of the device. In such an embodiment, wherein the instructions can further cause the processor to detect the conditions or events through the accelerometer.

Additionally or alternatively, the device can comprise a barometer within the case of the device. In such an embodiment, the instructions can further cause the processor to detect the conditions or events through the barometer.

Additionally or alternatively, the device can comprise one or more visual indicators within the case of the device. In such an embodiment, the instructions can further cause the processor to provide the one or more notifications through the visual indicators.

Additionally or alternatively, the device can comprise a reset button within the case of the device. In such an embodiment, the instructions can further cause the processor to perform a reset to a pre-defined state in response to actuation of the reset button.

According to one embodiment, the case can be substantially cylindrical in shape having a diameter of seven to eight millimeters and a length of eighteen to twenty-three millimeters. According to another embodiment, the case can be substantially a rectangular cuboid in shape. In such an embodiment, the case can have a height of seven to eight millimeters, a depth of seven to eight millimeters, and a length of eighteen to twenty millimeters. Alternatively, the case can have a height of six to eight millimeters, a depth of six to eight millimeters, and a length of fourteen to eighteen millimeters. In some cases, the rectangular cuboid can be arcuate. According to yet another embodiment, the case can be disc-shaped having a height of seven to eight millimeters and a diameter of eighteen to twenty millimeters.

According to one embodiment, a wearable article can comprise a piece of jewelry and an interchangeable module. The interchangeable module can comprise a processor and a memory communicatively coupled with the processor and storing instructions which, when executed by the processor, causes the processor to detect conditions or events and provide one or more notifications based on the detected conditions or events. A case can enclose the processor and the memory. The case can be configured to be mountable in the piece of jewelry by a user and interchangeable by the user between the piece of jewelry and another wearable article. For example, the piece of jewelry can comprise one of a ring, a bracelet, or a pendant. In some cases, the other wearable article can comprise another, different piece of jewelry.

### BRIEF DESCRIPTION OF THE DRAWINGS

FIGs. 1A-1C illustrate various views of a wearable module according to one embodiment.
FIGs. 2A-2D illustrate various views of a wearable module according to another embodiment.
FIGs. 3A-3D illustrate various views of a wearable module according to yet another embodiment.
FIGs. 4A-4C illustrate various views of a wearable module according to still another embodiment.
FIG. 5 is a block diagram illustrating various internal components of a wearable module according to one embodiment of the present disclosure.
FIGs. 6A-6C illustrate charging of wearable modules according to various embodiments of disclosure.
FIGs. 7A-7C illustrate various exemplary charging platforms for charging of wearable modules according to various embodiments of the disclosure.
FIGs. 8A and 8B illustrate use of a wearable module in a piece of jewelry according to one embodiment.
FIGs. 9A and 9B illustrate use of a wearable module in a piece of jewelry according to another embodiment.
FIGs. 10A and 10B illustrate use of a wearable module in a piece of jewelry according to yet another embodiment.

In the appended figures, similar components and/or features may have the same reference label. Further, various components of the same type may be distinguished by following the reference label by a letter that distinguishes among the similar components. If only the first reference label is used in the specification, the description is applicable to any one of the similar components having the same first reference label irrespective of the second reference label.

### DETAILED DESCRIPTION

In the following description, for the purposes of explanation, numerous specific details are set forth in order to provide a thorough understanding of various embodiments disclosed herein. It will be apparent, however, to one skilled in the art that various embodiments of the present disclosure may be practiced without some of these specific details. The ensuing description provides exemplary embodiments only, and is not intended to limit the scope or applicability of the disclosure. Furthermore, to avoid unnecessarily obscuring the present disclosure, the preceding description omits a number of known structures and devices. This omission is not to be construed as a limitation of the scopes of the claims. Rather, the ensuing description of the exemplary embodiments will provide those skilled in the art with an enabling description for implementing an exemplary embodiment. It should however be appreciated that the present disclosure may be practiced in a variety of ways beyond the specific detail set forth herein.

While the exemplary aspects, embodiments, and/or configurations illustrated herein show the various components of the system collocated, certain components of the system can be located remotely, at distant portions of a distributed network, such as a LAN and/or the Internet, or within a dedicated system. Thus, it should be appreciated, that the components of the system can be combined in to one or more devices or collocated on a particular node of a distributed network, such as an analog and/or digital telecommunications network, a packet-switch network, or a circuit-switched network. It will be appreciated from the following description, and for reasons of computational efficiency, that the components of the system can be arranged at any location within a distributed network of components without affecting the operation of the system.

Furthermore, it should be appreciated that the various links connecting the elements can be wired or wireless links, or any combination thereof, or any other known or later developed element(s) that is capable of supplying and/or communicating data to and from the connected elements. These wired or wireless links can also be secure links and may be capable of communicating encrypted information. Transmission media used as links, for example, can be any suitable carrier for electrical signals, including coaxial cables, copper wire and fiber optics, and may take the form of acoustic or light waves, such as those generated during radio-wave and infra-red data communications.

As used herein, the phrases "at least one," "one or more," "or," and "and/or" are openended expressions that are both conjunctive and disjunctive in operation. For example, each of the expressions "at least one of A, B and C," "at least one of A, B, or C," "one or more of A, B, and C," "one or more of A, B, or C," "A, B, and/or C," and "A, B, or C" means A alone, B alone, C alone, A and B together, A and C together, B and C together, or A, B and C together.

The term "a" or "an" entity refers to one or more of that entity. As such, the terms "a" (or "an"), "one or more" and "at least one" can be used interchangeably herein. It is also to be noted that the terms "comprising," "including," and "having" can be used interchangeably.

The term "automatic" and variations thereof, as used herein, refers to any process or operation done without material human input when the process or operation is performed. However, a process or operation can be automatic, even though performance of the process or operation uses material or immaterial human input, if the input is received before performance of the process or operation. Human input is deemed to be material if such input influences how the process or operation will be performed. Human input that consents to the performance of the process or operation is not deemed to be "material."

The term "computer-readable medium" as used herein refers to any tangible storage and/or transmission medium that participate in providing instructions to a processor for execution. Such a medium may take many forms, including but not limited to, non-volatile media, volatile media, and transmission media. Non-volatile media includes, for example, NVRAM, or magnetic or optical disks. Volatile media includes dynamic memory, such as main memory. Common forms of computer-readable media include, for example, a floppy disk, a flexible disk, hard disk, magnetic tape, or any other magnetic medium, magneto-optical medium, a CD-ROM, any other optical medium, punch cards, paper tape, any other physical medium with patterns of holes, a RAM, a PROM, and EPROM, a FLASH-EPROM, a solid state medium like a memory card, any other memory chip or cartridge, a carrier wave as described hereinafter, or any other medium from which a computer can read. A digital file attachment to e-mail or other self-contained information archive or set of archives is considered a distribution medium equivalent to a tangible storage medium. When the computer-readable media is configured as a database, it is to be understood that the database may be any type of database, such as relational, hierarchical, object-oriented, and/or the like. Accordingly, the disclosure is considered to include a tangible storage medium or distribution medium and prior art-recognized equivalents and successor media, in which the software implementations of the present disclosure are stored.

A "computer readable signal" medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device. Program code embodied on a computer readable medium may be transmitted using any appropriate medium, including but not limited to wireless, wireline, optical fiber cable, RF, etc., or any suitable combination of the foregoing.

The terms "determine," "calculate," and "compute," and variations thereof, as used herein, are used interchangeably and include any type of methodology, process, mathematical operation or technique.

It shall be understood that the term "means" as used herein shall be given its broadest possible interpretation in accordance with 35 U.S.C., Section 112, Paragraph 6. Accordingly, a claim incorporating the term "means" shall cover all structures, materials, or acts set forth herein, and all of the equivalents thereof. Further, the structures, materials or acts and the equivalents thereof shall include all those described in the summary of the disclosure, brief description of the drawings, detailed description, abstract, and claims themselves.

Aspects of the present disclosure may take the form of an entirely hardware embodiment, an entirely software embodiment (including firmware, resident software, microcode, etc. j or an embodiment combining software and hardware aspects that may all generally be referred to herein as a "circuit," "module" or "system." Any combination of one or more computer readable medium(s) may be utilized. The computer readable medium may be a computer readable signal medium or a computer readable storage medium.

In yet another embodiment, the systems and methods of this disclosure can be implemented in conjunction with a special purpose computer, a programmed microprocessor or microcontroller and peripheral integrated circuit element(s), an ASIC or other integrated circuit, a digital signal processor, a hard-wired electronic or logic circuit such as discrete element circuit, a programmable logic device or gate array such as PLD, PLA, FPGA, PAL, special purpose computer, any comparable means, or the like. In general, any device(s) or means capable of implementing the methodology illustrated herein can be used to implement the various aspects of this disclosure. Exemplary hardware that can be used for the disclosed embodiments, configurations, and aspects includes computers, handheld devices, telephones (e.g., cellular, Internet enabled, digital, analog, hybrids, and others), and other hardware known in the art. Some of these devices include processors (e.g., a single or multiple microprocessors), memory, nonvolatile storage, input devices, and output devices. Furthermore, alternative software implementations including, but not limited to, distributed processing or component/object distributed processing, parallel processing, or virtual machine processing can also be constructed to implement the methods described herein.

Examples of the processors as described herein may include, but are not limited to, at least one of Qualcomm® Snapdragon® 800 and 801, Qualcomm® Snapdragon® 610 and 615 with 4G LTE Integration and 64-bit computing, Apple® A7 processor with 64-bit architecture, Apple® M7 motion coprocessors, Samsung® Exynos® series, the Intel® Core™ family of processors, the Intel® Xeon® family of processors, the Intel® Atom™ family of processors, the Intel Itanium® family of processors, Intel® Core® i5-4670K and i7-4770K 22nm Haswell, Intel® Core® i5-3570K 22nm Ivy Bridge, the AMD® FX™ family of processors, AMD® FX-4300, FX-6300, and FX-8350 32nm Vishera, AMD® Kaveri processors, Texas Instruments® Jacinto C6000™ automotive infotainment processors, Texas Instruments® OMAP™ automotive-grade mobile processors, ARM® Cortex™-M processors, ARM® Cortex-A and ARM926EJ-S™ processors, other industry-equivalent processors, and may perform computational functions using any known or future-developed standard, instruction set, libraries, and/or architecture.

In yet another embodiment, the disclosed methods may be readily implemented in conjunction with software using object or object-oriented software development environments that provide portable source code that can be used on a variety of computer or workstation platforms. Alternatively, the disclosed system may be implemented partially or fully in hardware using standard logic circuits or VLSI design. Whether software or hardware is used to implement the systems in accordance with this disclosure is dependent on the speed and/or efficiency requirements of the system, the particular function, and the particular software or hardware systems or microprocessor or microcomputer systems being utilized.

In yet another embodiment, the disclosed methods may be partially implemented in software that can be stored on a storage medium, executed on programmed general-purpose computer with the cooperation of a controller and memory, a special purpose computer, a microprocessor, or the like. In these instances, the systems and methods of this disclosure can be implemented as program embedded on personal computer such as an applet, JAVA® or CGI script, as a resource residing on a server or computer workstation, as a routine embedded in a dedicated measurement system, system component, or the like. The system can also be implemented by physically incorporating the system and/or method into a software and/or hardware system.

Although the present disclosure describes components and functions implemented in the aspects, embodiments, and/or configurations with reference to particular standards and protocols, the aspects, embodiments, and/or configurations are not limited to such standards and protocols. Other similar standards and protocols not mentioned herein are in existence and are considered to be included in the present disclosure. Moreover, the standards and protocols mentioned herein and other similar standards and protocols not mentioned herein are periodically superseded by faster or more effective equivalents having essentially the same functions. Such replacement standards and protocols having the same functions are considered equivalents included in the present disclosure.

Embodiments of the disclosure provide an interchangeable wearable technology module and associated jewelry or other finewear, clothing, accessories, or other wearables. This interchangeable "smart" module can be integrated into multiple styles and pieces of jewelry across an entire product line. The module can be inserted into pendants, bracelets and rings and be interchanged between them by the consumer. The consumer may purchase an interchangeable module together with a particular piece of jewelry or other wearable article. Additionally or alternatively, the consumer may purchase one or more modules and one or more wearable articles separately and then interchange the modules between the articles as needed or as desired. Various additional details of embodiments of the present disclosure will be described below with reference to the figures. While the embodiments described below refer to particular shapes and sizes for implementing the interchangeable module described herein, it should be understood that other shapes and sizes are contemplated and considered to be within the scope of the present invention. Additionally, embodiments are described herein with reference to jewelry for illustrative purposes. However, it should be understood that other uses of the interchangeable module are contemplated and also considered to be within the scope of the present invention. For example, and sort of clothing or accessory which a consumer may wear or carry can be adapted to utilize embodiments of the interchangeable module as described herein. For example, these articles may include but are not limited to hats, gloves, shirts, pants, belts, eyewear, keychains, wallets, etc.

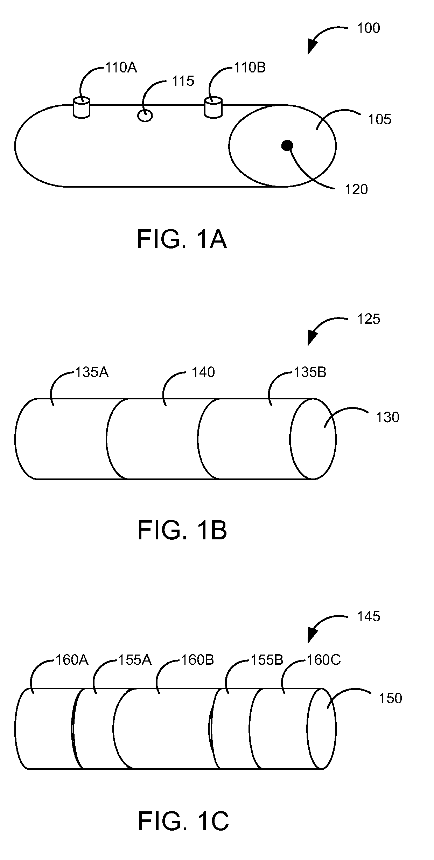

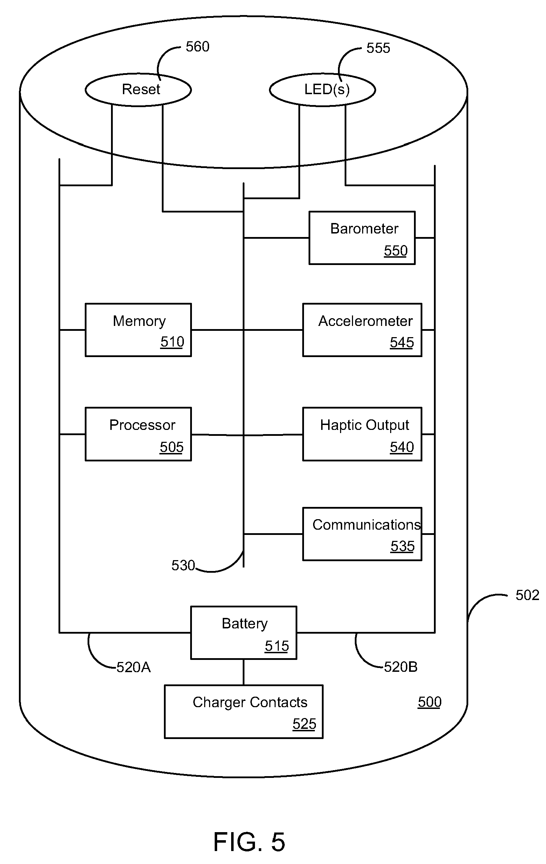

FIGs. 1A-1C illustrate various views of a wearable module according to one embodiment. In the example illustrated by FIG. 1A, a cylindrical module 100 is illustrated. This module can comprise a cylindrical case 105 enclosing the internal components such as will be described below with reference to FIG. 5. As illustrated here, the cylindrical module 100 can further comprise a set of charging pins 110A and 110 B or contacts through which the module 100 may connect with an external charge for charging the internal battery of the module 100. The cylindrical module 100 can also include an LED or other visual indicator 115 on or visible through the case 105. As will be described below, this visual indicator 115 can be used to signal the user or wearer of the module 100 of various conditions or events detected by the module 100. The case 105 may also include a reset button 120 or a small hole, e.g., a pinhole, through which an internal button or switch can be accessed and actuated to initiate a hard reset and/or reset the module 100 to factory settings.

FIGs. 1B and 1C also illustrate cylindrical module 125 and 145. These modules 125 and 145 can be similar to module 100 described with reference to FIG. 1A with some minor variations. As illustrated by FIG. 1B, instead of charging pins 110A and 110B, module 125 includes different areas on the case 130 through which electrical connection to a charger can be made. More specifically, the case 130 of module 125 includes contact areas 135A and 135 B at either distal end of the case 130 with a non-conductive area 140 between the contact areas 135A and 135B. Similarly, the case 150 of module 145 includes contact areas 155A and 155B separated by non-conductive areas 160A and 160C at either distal end of the case 150 and with a non-conductive area 160B in the middle of the case 150 and between the contact areas 155A and 155B. It should be understood that the various arrangements of the contact areas illustrated and described here can vary depending upon the exact implementation of the module and factors such as the type of wearable or other item into which it will be installed, the material of that item, the conductive nature of that material, the type of charger to be used, etc. It should also be understood that in other implementations, the module may be chargeable using an induction or other wireless charger. In such a case, the charging pins 110A and 110B and contact areas 135A, 135B, 155A, and 155B need not be included.

A cylindrical module 100, 125, or 145 such as illustrated by these embodiments is thought to be especially useful with rings or other small jewelry or accessories or in other implementations where space is limited. For example, in one implementation, this module can be approximately 18 to 23 millimeters long and have a diameter of approximately 7 to 8 millimeters. Functions performed by such a module and the components to implement those functions are described further below with reference to FIG. 5.

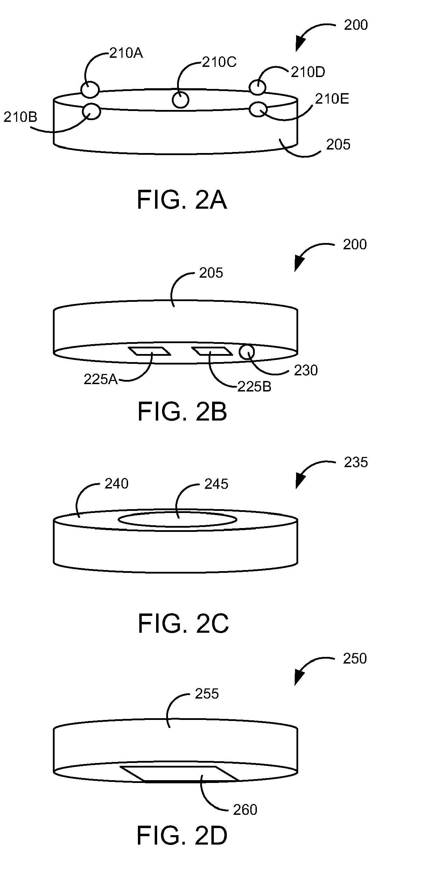

FIGs. 2A-2D illustrate various views of a wearable module according to another embodiment. In the example illustrated by FIG. 2A, a disc-shaped module 200 is illustrated. This module 200 can comprise a disc-shaped case 205 enclosing the internal components such as will be described below with reference to FIG. 5. As illustrated here, the disc-shaped module can include a set of LEDs or other visual indicators 210A-210E on or visible through the case 205. As will be described below, these visual indicators 210A-210E can be used to signal the user or wearer of the module 200 of various conditions or events detected by the module 200.

As illustrated in FIG. 2B, the bottom of the case 205, or the side opposite the visual indicators 210A-210E, may also include a reset button 230 or a small hole, e.g., a pinhole, through which an internal button or switch can be accessed and actuated to initiate a hard reset and/or reset the module 200 to factory settings. In some cases, the module 200 can further comprise a set of charging contacts 225A and 225B through which the module 200 may connect with an external charger for charging the internal battery of the module 200.

FIGs. 2C and 2D also illustrate disc-shaped module 235 and 250. These modules 125 and 145 can be similar to module 200 described with reference to FIGs. 2A and 2B with some minor variations. As illustrated by FIG. 2C, instead of the set of visible indicators 210A-210E illustrated in FIG. 2A, module 235 includes a non-conductive, transparent area 245 of the case 240. This non-conductive, transparent area 245 can allow a set of internal visual indicators to be visible through the case 240. Similarly, rather than the charging contact areas 225A and 225B illustrated on the surface of the case 205 in FIG. 2B, FIG. 2D illustrates a charging contact area 260 comprising a hole or recess through which a set of charger prongs or extensions may be inserted to make contact with contacts inside of the case 255. It should be understood that the various arrangements of the contact areas illustrated and described here can vary depending upon the exact implementation of the module and factors such as the type of wearable or other item into which it will be installed, the material of that item, the conductive nature of that material, the type of charger to be used, etc. It should also be understood that in other implementations, the module may be chargeable using an induction or other wireless charger. In such a case, the charging contact areas 225A, 225B, and/or 260 need not be included.

A disc-shaped module 200, 235, or 250 such as illustrated by these embodiments is thought to be especially useful with pendants or other larger jewelry or accessories or in other implementations where more space is available and where such a round, relatively flat module can be installed. For example, in one implementation, this module can be approximately 7 to 8 millimeters high and have a diameter of approximately 18 to 20 millimeters. Functions performed by such a module and the components to implement those functions are described further below with reference to FIG. 5.

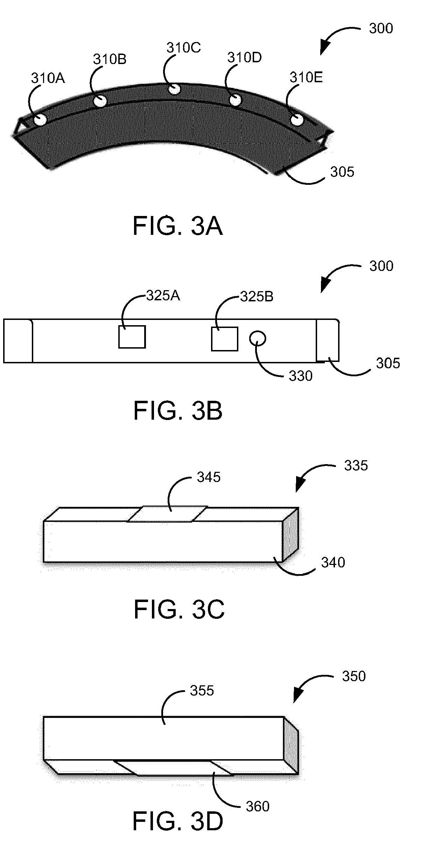

FIGs. 3A-3D illustrate various views of a wearable module according to yet another embodiment. In the example illustrated by FIG. 3A, an arcuate, rectangular cuboid-shaped module 300 is illustrated. This module 300 can comprise a case 305 enclosing the internal components such as will be described below with reference to FIG. 5. As illustrated here, the module can include a set of LEDs or other visual indicators 310A-310E on or visible through the case 305. As will be described below, these visual indicators 310A-210E can be used to signal the user or wearer of the module 300 of various conditions or events detected by the module 300.

As illustrated in FIG. 3B, the bottom of the case 305, or the side opposite the visual indicators 310A-310E, may also include a reset button 330 or a small hole, e.g., a pinhole, through which an internal button or switch can be accessed and actuated to initiate a hard reset and/or reset the module 300 to factory settings. In some cases, the module 300 can further comprise a set of charging contacts 325A and 325B through which the module 300 may connect with an external charger for charging the internal battery of the module 300.

FIGs. 3C and 3D also illustrate modules 335 and 350 similar to module 300 described with reference to FIGs. 3A and 3B with some minor variations. As illustrated by FIGs. 3C and 3D, the modules 335 and 350 are still rectangular cuboid-shaped but are not arcuate. Rather, both modules are substantially flat along the long edges of the cuboid. As illustrated by this difference, the exact shape and size of the modules implemented according to the embodiments described here can vary depending upon how and where the module will be used. For example, the arcuate shape illustrated in FIGs. 3A and 3B is thought to be useful when the module is implemented in an article worn or carried close to a curved portion of the user's body while the relatively flat shape may be preferred when the module will be worn or carried close to other portions of the user's body.

Also as illustrated by FIGs. 3C and 3D, instead of the set of visible indicators 310A-310E illustrated in FIG. 3A, module 335 includes a non-conductive, transparent area 345 of the case 340. This non-conductive, transparent area 345 can allow a set of internal visual indicators to be visible through the case 340. Similarly, rather than the charging contact areas 325A and 325B illustrated on the surface of the case 305 in FIG. 3B, FIG. 3D illustrates a charging contact area 360 comprising a hole or recess through which a set of charger prongs or extensions may be inserted to make contact with contacts inside of the case 355. It should be understood that the various arrangements of the contact areas illustrated and described here can vary depending upon the exact implementation of the module and factors such as the type of wearable or other item into which it will be installed, the material of that item, the conductive nature of that material, the type of charger to be used, etc. It should also be understood that in other implementations, the module may be chargeable using an induction or other wireless charger. In such a case, the charging contact areas 325A, 325B, and/or 360 need not be included.

A module 300, 335, or 350 such as illustrated by these embodiments is thought to be especially useful with bracelets or other larger jewelry or accessories or in other implementations where more space is available and where such a relatively long, relatively flat module can be installed. For example, in one implementation, this module can be approximately 7 to 8 millimeters high, 7 to 8 millimeters deep, and have a length of approximately 18 to 20 millimeters. Functions performed by such a module and the components to implement those functions are described further below with reference to FIG. 5.

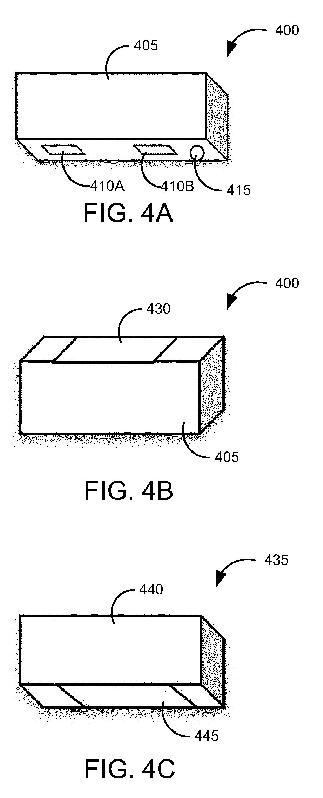

FIGs. 4A-4C illustrate various views of a wearable module according to still another embodiment. In the example illustrated by FIG. 4A, a rectangular cuboid-shaped module 400 is illustrated. This module 400 can comprise a case 405 enclosing the internal components such as will be described below with reference to FIG. 5. As illustrated here, a set of charging contacts 410A and 410B through which the module 400 may connect with an external charger for charging the internal battery of the module 400. The module 400 can also include a reset button 415 or a small hole, e.g., a pinhole, through which an internal button or switch can be accessed and actuated to initiate a hard reset and/or reset the module 400 to factory settings. As illustrated in FIG. 4B, the module 400 can further comprise a non-conductive, transparent area 430 of the case 405. This non-conductive, transparent area 430 can allow a set of internal visual indicators to be visible through the case 405.

FIGs. 4C also illustrates a module 435 similar to module 400 described with reference to FIGs. 4A and 4B with some minor variations. As illustrated by FIGs. 4C, rather than the charging contact areas 410A and 410B illustrated on the surface of the case 405 in FIG. 4A, FIG. 4C illustrates a charging contact area 445 comprising a hole or recess through which a set of charger prongs or extensions may be inserted to make contact with contacts inside of the case 440. It should be understood that the various arrangements of the contact areas illustrated and described here can vary depending upon the exact implementation of the module and factors such as the type of wearable or other item into which it will be installed, the material of that item, the conductive nature of that material, the type of charger to be used, etc. It should also be understood that in other implementations, the module may be chargeable using an induction or other wireless charger. In such a case, the charging contact areas 410A, 410B, and/or 445 need not be included.

A module 400 or 440 such as illustrated by these embodiments is thought to be especially useful with relatively small jewelry or accessories or in other implementations where space is limited. For example, in one implementation, this module can be approximately 6 to 8 millimeters high, 6 to 8 millimeters deep, and have a length of approximately 14 to 18 millimeters. Functions performed by such a module and the components to implement those functions are described further below with reference to FIG. 5.

FIG. 5 is a block diagram illustrating various internal components of a wearable module according to one embodiment of the present disclosure. More specifically, the various internal components described here illustrate some, but not necessarily all, of the exemplary components that may be included, but are not necessarily required to be included, within the case of the various types of modules described above. In some cases, the components included may be limited by the physical size of the case itself or by the expected uses for a particular module and the functions expected for that use. Therefore, the various components described here are offered for illustrative purposes and are not intended to limit the scope of the present invention.

As introduced above, the module 500 can comprise an exterior case 502 or covering. While the material of this case 5002 can vary significantly depending upon the implementation, various characteristics may be considered to be desirable. For example, it can be beneficial for this case 502 to be splash proof as defined by the IPX4 standard. The module 500 should be able to withstand the temperature & humidity ranges found in daily life which can roughly be defined as -20°C to 60°C (-4°F to 140°F). The module 500 should also be able to withstand the shock and vibrations of day to day use while encased in a ring, bracelet, necklace, or other wearable form. Since the module may be handled by the consumer frequently and placed inside an enclosed or partially enclosed jewelry housing, the case material should be able to withstand the potential corrosion effects of oil from human contact, household dirt, and any reaction to commonly used jewelry materials such as gold, silver, gemstones, etc. Various types of polymers and other materials are commonly known to exhibit these types of characteristics and any of these or other such materials may be used to form the case 502 of the module 500. In some cases, it may be desirable for the case 502 to be able to diffuse light or to be at least somewhat translucent, at least in some regions. Therefore, the case 502 may be formed from a material that can cause the light to diffuse along the sides, top, and/or other portions of the module.

Within the case 502, the module 500 can comprise any number of components but will most likely include a processor 505 and a memory 510. Generally speaking, the memory can store pre-loaded instructions which, when executed by the processor, cause the processor to perform the various functions described below. As can be understood, the size and speed of the memory and the speed of the processor can vary depending upon the implementation. Also as can be understood, the processor 505 and memory 510 can be communicatively coupled with each other and other components of the module 500 by a data bus 530.

The basic components included in the module 500 can also comprise, as introduced above, a set of charging contacts 525. According to one embodiment, the module 500 can be charged with two metal contact points that connect to pins on a charging cradle. According to another embodiment, inductive charging or other wireless charging may be used. In such a case, the charger contacts 525 can comprise an inductive coupler or other suitable wireless charging coupler. The battery 515 can be of a size and type to be rechargeable in a period of approximately 6 hours and last for approximately 18 hours of regular usage. Regular usage can be considered to involve approximately 40 notifications per day and where a notification causes both the visual (LED) and buzzer (haptic) outputs to pulse twice in succession. The battery can be connected with and supply power to the other components of the module 500 via a power bus 520A and 520B.

Components of the module 500 can also include a communications module 535. According to one embodiment, the communications module 535 can comprise a Bluetooth transceiver to provide pairing between the module 500 and a mobile device. In such cases, the communications module 535 can provide pairing with a mobile phone with a typical range for Bluetooth communications, e.g., approximately 2 meters. According to one embodiment, data can be transferred over this link periodically, e.g., every 30 seconds. According to one embodiment, a Bluetooth pairing process may be initiated by a button 560 for both resetting and pairing the module. The module 500 may be registered via an application ("app") executed on a third device, for example, a mobile phone, which can send the registration over a network. The module 500 may be connected with a code typed into the application that is kept with the packaging. According to one embodiment, the communications module 535 can also comprise a Bluetooth directional antenna. In such a case, the jewelry or setting may be designed to provide a known orientation for the module 500 to align the module with a hole, opening, or window through the jewelry to send Bluetooth signals.

Components of the module 500 can also include a haptic output module 540 such as a haptic motor, buzzer, etc. Generally speaking, the haptic output module 540 can provide a haptic feedback that can be felt by the user while wearing the module as a bracelet or necklace. For bracelets, it can be expected that the module will be positioned and worn on the top of the wrist. For pendants, the encasing necklace can be on a short enough chain that the encased module will be have direct skin contact to the chest, i.e., approximately 24". However, if on a longer necklace is used or if the user is leaning forward, the light combined with the haptic noise may suffice for notification.

Components of the module 500 can also include an accelerometer 545 capable of tracking the user's steps (approximately) in both pendant and bracelet form.. Generally speaking, the accelerometer 545 can be used to measure the number of steps taken. In some cases, the accelerometer 545 can be used to recognize if the module 500 is installed in a bracelet or necklace case based on a motion path of the user over time. According to one embodiment, the module 500 can receive input from the user by the user tapping on the module and the accelerometer 545 detecting the input. According to one embodiment, setting the module 500 in the charger can reset the module 500 to make a new determination of whether it's in a bracelet or pendant the next time movement is detected.

According to one embodiment, the module 500 may include a barometer 550 to determine elevation or changes in elevation.

Components of the module 500 can also include one or more LEDs 555 or other visual indictors. These LEDs 555 or visual indicators can provide notification when the module 500 pairs via Bluetooth, or when low on power or malfunctioning. According to one embodiment, the LEDs 555 can comprise multicolored LEDs capable of showing all colors. The LEDs 555 can be located on the module 500, e.g., top or sides of the module, so the user can see the light when looking down from a necklace or along the sides so it will be visible when in a bracelet format.

Components of the module 500 can also include, as introduced above, a reset button 560 or a pin hole through which a recessed button can be accessed and actuated by the user or a serviceman to reset the module 500 to factory settings. Either can reset to factory settings to repair, e.g., via Bluetooth, with a new phone or can reset to factory settings to test module for defects. This feature can allow the module to go back into its original settings and repair with a new phone. According to one embodiment, the reset button 560 can be visibly seen as a pin hole in the module 500 that a user inserts a pin into to reset it back to original settings.

According to one embodiment, the user can receive the module 500 from the store or online, separate from or with jewelry encasing. Along with the module 500 can be an instruction pamphlet explaining where to go to download the app to run it. The module 500 can also come with instructions on how to pair the device via Bluetooth to a mobile phone, e.g., by actuating the pairing button, by entering a code from the packaging, or with app pairing. During initial set up of the module, the user can download the phone app and then pair the module 500 to the phone or other mobile device. The phone or mobile device has an onboard screen to explain how it works and guide the user. According to one embodiment, the user can be prompted to set up which contacts are "loved ones," i.e., family, friends, etc., that they want to get notifications for.

According to one embodiment, the module 500 may communicate, via the communication module, with a unique fitness tracking application and/or with other existing third party applications, e.g., Fitbit, AppleHealth, MapMyFitness, etc., executing on the paired mobile device. In this way, the module 500 can transmit motion data to the mobile device and the user can track their daily activity (via steps). The mobile device app can translate the data into step tracking against goals. The tracking can be done with either a unique designed application or in partnership with other apps.

As noted above, during set up and within the mobile application, the user can select contacts that are designated "loved ones." When a loved one contacts the user via phone or text, the module 500 can respond with a vibration followed by a colored light to indicate which loved one contacted them. According to one embodiment, there can be an expected number, e.g., 6, loved ones per user and an expected 40-50 notifications per day. Notification signals can be sent from the phone or mobile device to the module 500 periodically, e.g., every 30 seconds, more or less, to conserve battery life while allowing the module 500 to be reasonably responsive.

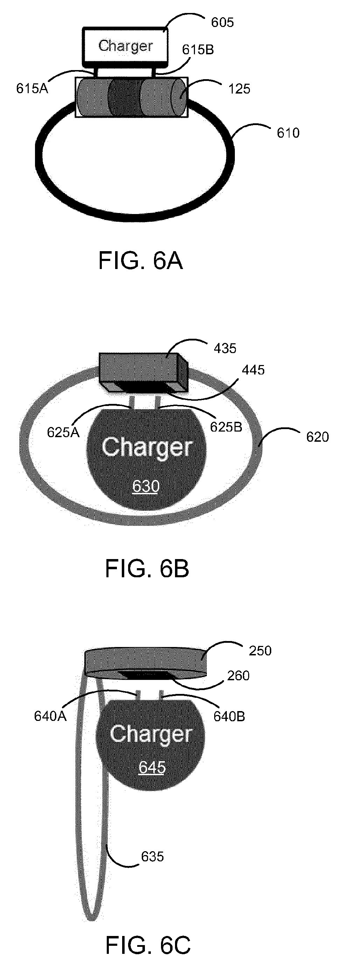

FIGs. 6A-6C illustrate charging of wearable modules according to various embodiments of disclosure. More specifically, FIG. 6A illustrates a charger 605 connected through charger contacts 615A and 615B to a cylindrical module 125 such as described above with reference to FIG. 1B. As illustrated here, the cylindrical module 125 is installed within a bracelet 610. The charger contacts 615A and 615B are aligned with the contact areas 135A and 135B of the module. According to one embodiment, the charger contacts 615A and 615B can be aligned with the contact areas 135A and 135B of the module by use of magnets within the charger 605.

FIG. 6B illustrates a charger 630 connected through charger contacts 625A and 625B to a rectangular cuboid module 435 such as described above with reference to FIG. 4C. As illustrated here, the module 435 is installed within a bracelet 620. The charger contacts 625A and 625B are aligned with the module 435 through the contact area 445 of the module 435. According to one embodiment, the charger contacts 625A and 625B can be aligned with the contact area 445 of the module by use of magnets within the charger 630.

FIG. 6C illustrates a charger 645 connected through charger contacts 640A and 640B to a disc-shaped module 250 such as described above with reference to FIG. 2D. As illustrated here, the module 250 is installed within a pendant 635. The charger contacts 640A and 640B are aligned with the module 250 through the contact area 260 of the module 250. According to one embodiment, the charger contacts 640A and 640B can be aligned with the contact area 260 of the module by use of magnets within the charger 645.

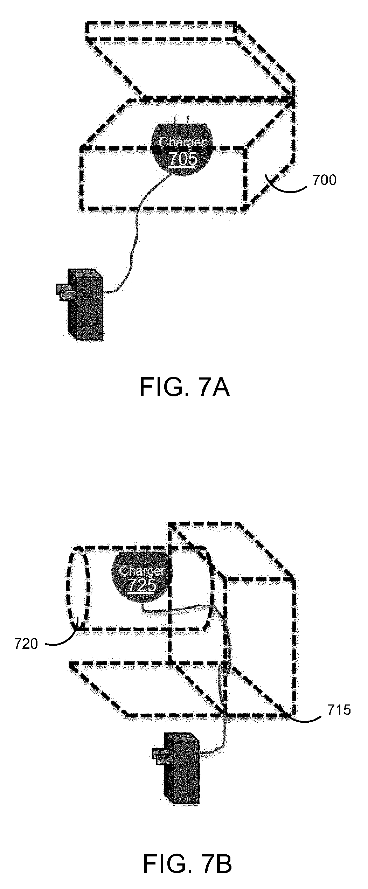

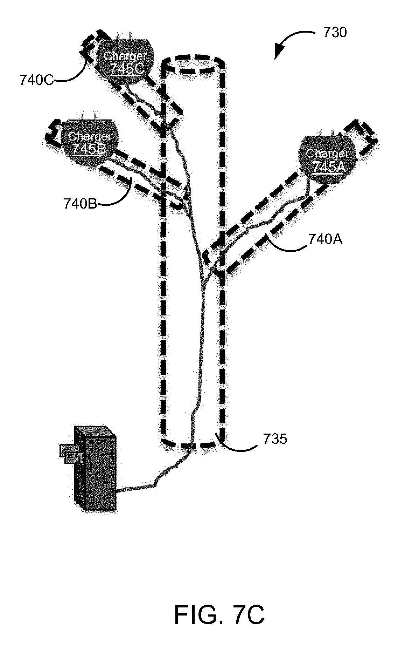

FIGs. 7A-7C illustrate various exemplary charging platforms for charging of wearable modules according to various embodiments of the disclosure. As illustrated in the example of FIG. 7A, a charging platform for a wearable device can comprise a jewelry box 700 in which the charger 705 can be mounted. The jewelry or other wearable can be placed into the jewelry box 700 and onto the charger to charge the interchangeable module while it is still mounted in the jewelry. In another example, the charging platform can comprise a jewelry holder 715 or stand as illustrated in FIG. 7B. As this example illustrates, the charger 725 can be mounted inside of an extension or hanger 720 extending from the base of the holder 715. When the jewelry with the interchangeable device mounted therein is placed onto the hanger 720 for storage or display, the module can be brought into contact with the charger 725 for charging of the module while still mounted in the jewelry. In yet another example, as illustrated by FIG. 7C, the charging platform can comprise a jewelry tree730 comprising a base or trunk 735 with a number of branches 740A-C extending from the trunk 735. A charging unit 745A-C can be mounting in each branch 740A-740C. When a piece of jewelry with an interchangeable device mounted therein is placed onto a branch 740B for storage or display, the module can be brought into contact with the charger 745B in that branch 740B for charging of the module while still mounted in the jewelry. In this way, a number of modules can be charged at one time. Other possible arrangements or configurations of charging platforms are contemplated and considered to be within the scope of the present invention.

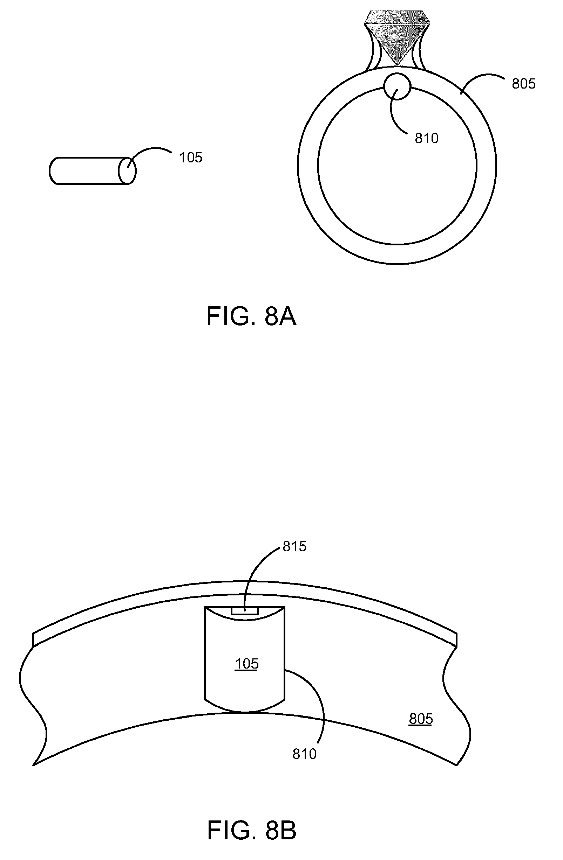

FIGs. 8A and 8B illustrate use of a wearable module in a piece of jewelry according to one embodiment. More specifically, this example illustrates a ring 805 into which a cylindrical module 105 as described above can be mounted. As can be seem in the side view of the ring 805 in FIG. 8A, the ring can include a module mounting receptacle 810 such as a pocket or cavity of a size and shape matching the module. When the module is placed into the mounting receptacle 810 as illustrated in the view of the inside of the ring in FIG. 8B, the module may be held into place by a catch or latch 815 or similar means to secure the module 105 in place in the ring 810. Other means for securing the module 105 in place can include but are not limited to a set screw, door or cover which may slide or may be removable, a set of grooves on either the module or the ring into which matching extension on the other piece may lock, or other similar means. While not illustrated here for the sake of simplicity, the ring 805 may be configured with one or more holes or openings to make the visible indicators of the module 105 viewable by the wearer when the module 105 is mounted and the ring 805 is being worn. Additionally or alternatively, the ring 805 may have one or more holes or openings appropriately located for the physical layout of the module 105 and location of the Bluetooth transceiver therein to facilitate signal transmissions to and from the module. It should also be understood that any number of other variations are contemplated, depending upon the exact implementation and all such variations are considered to be within the scope of the present invention. Such variations can include but are not limited to different arrangements for mounting and securing the module 105, different locations for mounting the module 105, use of different types and sizes of modules as described above and as size and available space permit.

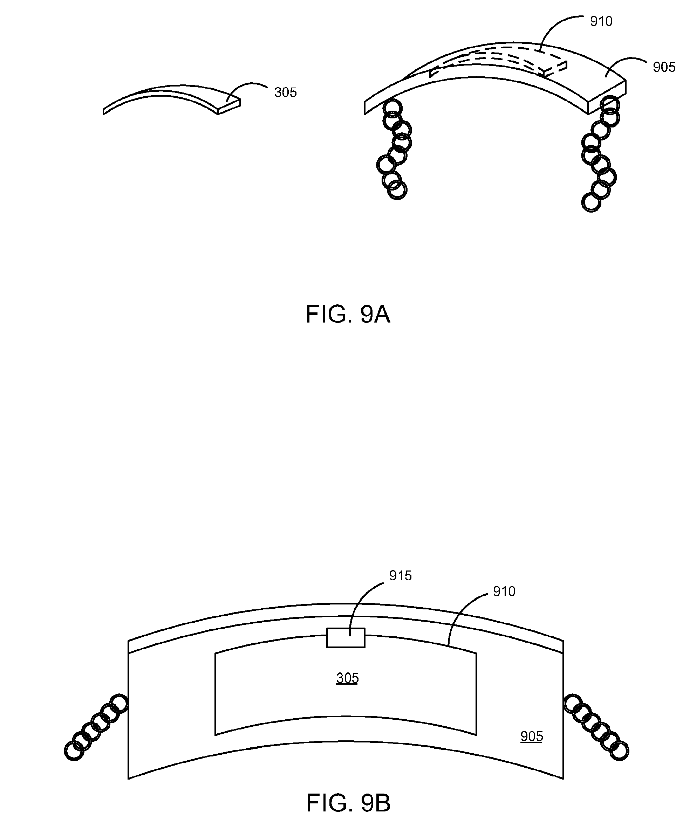

FIGs. 9A and 9B illustrate use of a wearable module in a piece of jewelry according to another embodiment. More specifically, this example illustrates a bracelet 905 into which an acruate rectangular cuboid-shaped module 305 as described above can be mounted. As can be seem in the view of the bracelet 905 in FIG. 9A, the bracelet can include a module mounting receptacle 910 such as a pocket or cavity of a size and shape matching the module 305. When the module 305 is placed into the mounting receptacle 910 as illustrated in the view in FIG. 9B, the module 305 may be held into place by a catch or latch 915 or similar means to secure the module 305 in place in the bracelet 905. Other means for securing the module 305 in place can include but are not limited to a set screw, door or cover which may slide or may be removable, a set of grooves on either the module or the ring into which matching extension on the other piece may lock, or other similar means. While not illustrated here for the sake of simplicity, the bracelet 905 may be configured with one or more holes or openings to make the visible indicators of the module 305 viewable by the wearer when the module 305 is mounted and the bracelet 905 is being worn. Additionally or alternatively, the bracelet 905 may have one or more holes or openings appropriately located for the physical layout of the module 305 and location of the Bluetooth transceiver therein to facilitate signal transmissions to and from the module. It should also be understood that any number of other variations are contemplated, depending upon the exact implementation and all such variations are considered to be within the scope of the present invention. Such variations can include but are not limited to different arrangements for mounting and securing the module 305, different locations for mounting the module 305, use of different types and sizes of modules as described above and as size and available space permit.

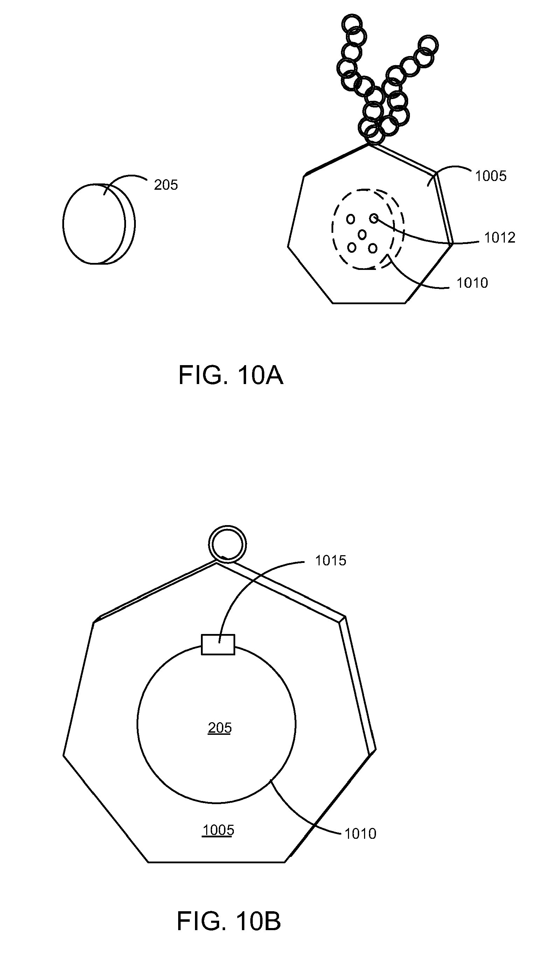

FIGs. 10A and 10B illustrate use of a wearable module in a piece of jewelry according to yet another embodiment. More specifically, this example illustrates a pendant 1005 into which a disc-shaped module 205 as described above can be mounted. As can be seem in the view of the pendant 1005 in FIG. 10A, the pendant 1005 can include a module mounting receptacle 1010 such as a pocket or cavity of a size and shape matching the module 205. When the module 205 is placed into the mounting receptacle 1010 as illustrated in the view in FIG. 10B, the module 205 may be held into place by a catch or latch 1015 or similar means to secure the module 205 in place in the pendant 1005. Other means for securing the module 205 in place can include but are not limited to a set screw, door or cover which may slide or may be removable, a set of grooves on either the module or the ring into which matching extension on the other piece may lock, or other similar means. As illustrated in FIG. 10A, the pendant 1005 may be configured with one or more holes or openings 1012 to make the visible indicators of the module 205 viewable by the wearer when the module 205 is mounted and the pendant 1005 is being worn. Additionally or alternatively, the holes or openings 1012 can be appropriately located for the physical layout of the module 205 and location of the Bluetooth transceiver therein to facilitate signal transmissions to and from the module. It should also be understood that any number of other variations are contemplated, depending upon the exact implementation and all such variations are considered to be within the scope of the present invention. Such variations can include but are not limited to different arrangements for mounting and securing the module 205, different locations for mounting the module 205, use of different types and sizes of modules as described above and as size and available space permit.

The present disclosure, in various aspects, embodiments, and/or configurations, includes components, methods, processes, systems, and/or apparatus substantially as depicted and described herein, including various aspects, embodiments, configurations embodiments, subcombinations, and/or subsets thereof. Those of skill in the art will understand how to make and use the disclosed aspects, embodiments, and/or configurations after understanding the present disclosure. The present disclosure, in various aspects, embodiments, and/or configurations, includes providing devices and processes in the absence of items not depicted and/or described herein or in various aspects, embodiments, and/or configurations hereof, including in the absence of such items as may have been used in previous devices or processes, e.g., for improving performance, achieving ease and\or reducing cost of implementation.

The foregoing discussion has been presented for purposes of illustration and description. The foregoing is not intended to limit the disclosure to the form or forms disclosed herein. In the foregoing Detailed Description for example, various features of the disclosure are grouped together in one or more aspects, embodiments, and/or configurations for the purpose of streamlining the disclosure. The features of the aspects, embodiments, and/or configurations of the disclosure may be combined in alternate aspects, embodiments, and/or configurations other than those discussed above. This method of disclosure is not to be interpreted as reflecting an intention that the claims require more features than are expressly recited in each claim. Rather, as the following claims reflect, inventive aspects lie in less than all features of a single foregoing disclosed aspect, embodiment, and/or configuration. Thus, the following claims are hereby incorporated into this Detailed Description, with each claim standing on its own as a separate preferred embodiment of the disclosure.

Moreover, though the description has included description of one or more aspects, embodiments, and/or configurations and certain variations and modifications, other variations, combinations, and modifications are within the scope of the disclosure, e.g., as may be within the skill and knowledge of those in the art, after understanding the present disclosure. It is intended to obtain rights which include alternative aspects, embodiments, and/or configurations to the extent permitted, including alternate, interchangeable and/or equivalent structures, functions, ranges or steps to those claimed, whether or not such alternate, interchangeable and/or equivalent structures, functions, ranges or steps are disclosed herein, and without intending to publicly dedicate any patentable subject matter.

The application also discloses the following aspects described in the following clauses which are not claims:
(1) A wearable device comprising a processor; a memory communicatively coupled with the processor and storing instructions which, when executed by the processor, causes the processor to detect conditions or events and provide one or more notifications based on the detected conditions or events; and a case enclosing the processor and the memory, the case configured to be mountable in and interchangeable between different wearable objects or articles by a user of the device.
(2) The device of clause 1, further comprising a communications module within the case of the device and wherein the instructions further cause the processor to communicate with a computing device via the communications module.
(3) The device of any preceding clause, in particular clause 2, further comprising a reset button within the case of the device and wherein the instructions further cause the processor to perform a pairing with the computing device in response to actuation of the reset button.
(4) The device of any preceding clause, in particular clause 1, further comprising a haptic output device within the case of the device and wherein the instructions further cause the processor to provide the one or more notifications through the haptic output device.
(5) The device of any preceding clause, in particular clause 1, further comprising an accelerometer within the case of the device and wherein the instructions further cause the processor to detect the conditions or events through the accelerometer.
(6) The device of any preceding clause, in particular clause 1, further comprising a barometer within the case of the device and wherein the instructions further cause the processor to detect the conditions or events through the barometer.
(7) The device of any preceding clause, in particular clause 1, further comprising one or more visual indicators within the case of the device and wherein the instructions further cause the processor to provide the one or more notifications through the visual indicators.
(8) The device of any preceding clause, in particular clause 1, further comprising a reset button within the case of the device and wherein the instructions further cause the processor to perform a reset to a pre-defined state in response to actuation of the reset button.
(9) The device of any preceding clause, in particular clause 1, wherein the case is substantially cylindrical in shape having a diameter of seven to eight millimeters and a length of eighteen to twenty-three millimeters.
(10) The device of any preceding clause, in particular clause 1, wherein the case is substantially a rectangular cuboid in shape.
(11) The device of any preceding clause, in particular clause 10, wherein the case has a height of seven to eight millimeters, a depth of seven to eight millimeters, and a length of eighteen to twenty millimeters.
(12) The device of any preceding clause, in particular clause 10, wherein the case has a height of six to eight millimeters, a depth of six to eight millimeters, and a length of fourteen to eighteen millimeters.
(13) The device of any of clauses 10, 11 and 12, wherein the rectangular cuboid is arcuate.
(14) The device of any preceding clause, in particular clause 1, wherein the case is disc-shaped having a height of seven to eight millimeters and a diameter of eighteen to twenty millimeters.
(15) The device of any preceding clause, in particular clause 1, wherein the different wearable objects or articles comprise a ring.
(16) The device of any preceding clause, in particular clause 1, wherein the different wearable objects or articles comprise a bracelet.
(17) The device of any preceding clause, in particular clause 1, wherein the different wearable objects or articles comprise a pendant.
(18) A wearable article comprising a piece of jewelry; and an interchangeable module comprising: a processor, a memory communicatively coupled with the processor and storing instructions which, when executed by the processor, causes the processor to detect conditions or events and provide one or more notifications based on the detected conditions or events, and a case enclosing the processor and the memory, the case configured to be mountable in piece of jewelry by a user and interchangeable by the user between the piece of jewelry and another wearable article.
(19) The wearable article of clause 18, wherein the piece of jewelry comprises one of a ring, a bracelet, or a pendant.
(20) The wearable article of clause 18 or 19, wherein the other wearable article comprises another, different piece of jewelry.

## Claims

1. A wearable device comprising:
a processor;
a memory communicatively coupled with the processor and storing instructions which, when executed by the processor, causes the processor to detect conditions or events and provide one or more notifications based on the detected conditions or events; and
a case enclosing the processor and the memory, the case configured to be mountable in and interchangeable between different wearable objects or articles by a user of the device.

2. The device of claim 1, further comprising a communications module within the case of the device and wherein the instructions further cause the processor to communicate with a computing device via the communications module.

3. The device of claim 1 or 2, further comprising a reset button within the case of the device and wherein the instructions further cause the processor to perform a pairing with the computing device in response to actuation of the reset button.

4. The device of any preceding claim, further comprising a haptic output device within the case of the device and wherein the instructions further cause the processor to provide the one or more notifications through the haptic output device.

5. The device of any preceding claim, further comprising an accelerometer within the case of the device and wherein the instructions further cause the processor to detect the conditions or events through the accelerometer.

6. The device of any preceding claim, further comprising a barometer within the case of the device and wherein the instructions further cause the processor to detect the conditions or events through the barometer.

7. The device of any preceding claim, further comprising one or more visual indicators within the case of the device and wherein the instructions further cause the processor to provide the one or more notifications through the visual indicators.

8. The device of any preceding claim, further comprising a reset button within the case of the device and wherein the instructions further cause the processor to perform a reset to a pre-defined state in response to actuation of the reset button.

9. The device of any preceding claim, wherein the case is substantially cylindrical in shape having a diameter of seven to eight millimeters and a length of eighteen to twenty-three millimeters.

10. The device of any preceding claim, wherein the case is substantially a rectangular cuboid in shape, wherein, in particular, the rectangular cuboid is arcuate.

11. The device of any preceding claim, wherein the case has a height of seven to eight millimeters, a depth of seven to eight millimeters, and a length of eighteen to twenty millimeters; or wherein the case has a height of six to eight millimeters, a depth of six to eight millimeters, and a length of fourteen to eighteen millimeters; or wherein the case is disc-shaped having a height of seven to eight millimeters and a diameter of eighteen to twenty millimeters.

12. The device of any preceding claim, wherein the different wearable objects or articles comprise at least one of a ring, a bracelet, or a pendant.

13. A wearable article comprising a piece of jewelry and an interchangeable module comprising a device according to any preceding claim, wherein the case is configured to be mountable in the piece of jewelry by a user and interchangeable by the user between the piece of jewelry and another wearable article.

14. The wearable article of claim 13, wherein the piece of jewelry comprises one of a ring, a bracelet, or a pendant.

15. The wearable article of claim 13 or 14, wherein the other wearable article comprises another, different piece of jewelry.
